# EUROPEAN PATENT SPECIFICATION

(11) **EP 2 117 270 B1**
(45) Date of publication and mention of the grant of the patent: **15.06.2011**
(21) Application number: 09161084.0
(22) Date of filing: 21.07.2006
(51) Int. Cl.: H04W 36/22

(54) **Method for detecting data congestion and applying a cell reselection offset**
Verfahren zur Erkennung des Datenstaus und Anwendung eines Zellenneuauswahl-Versatzes
Procédé pour détecter la congestion de données et appliquer un délai de resélection de cellule

(43) Date of publication of application: 11.11.2009
(62) Divisional of application: 06117679.8
(73) Proprietor: RESEARCH IN MOTION LIMITED, Waterloo, Ontario N2L 3W8 (CA)
(72) Inventor: Hanov, Steven, Waterloo Ontario N2L 3W8 (CA); Wandel, Matthias, Waterloo Ontario N2L 1S3 (CA)
(74) Representative: Moore, Barry

(56) References cited:
- EP-A2- 0 862 346
- EP-A2- 0 999 716
- WO-A-00/18164
- GB-A- 2 397 469
- US-A1- 2005 020 272

## Description

The present application relates to data congestion in mobile networks and in particular to cell reselection to reduce data congestion.

3GPP standards and in particular 3GPP 5.08 requires a mobile device to select a cell to connect to based only on signal strength. As a result, all mobile devices in practice tend to connect to the nearest and strongest cell, sharing its packet data channels, and potentially causing data congestion. This is true even when another cell that is only slightly weaker is available and sits idle. This is true of other types of wireless networks as well.

While in circuit switched channels a handover mechanism exists, for packet data all mobile devices multiplex available channels, thereby resulting in low throughput rates when a large number of mobile devices are connected. The length of data calls also tends to be shorter than voice (circuit switched) calls, making handover during a data call impractical. A data call is referred to herein as a temporary block flow (TBF).

For circuit switched channels, the network initiates the handover. However, network controlled cell reselection is not widely deployed for data. There are existing mechanisms, such as network controlled cell selection, in place that allow for mobiles to be directed to specific cells by the network. These mechanisms typically involve some per-mobile overhead in communicating measurements to the network. Such a mechanism is useful for dealing with a relatively small number of mobiles (less than 10) doing relatively long data transfers. However, for cases where there are hundreds of mobiles doing very short and sporadic transfers, the overhead of network controlled cell selection will cause sufficient overhead to reduce the overall throughput of the network.

For congested cells it is undesirable for a network to control cell reselection since every mobile device connected to the cell would need to constantly send measurement reports to the cell. This would take up packet resources and further reduce network performance.

GB2397469 discloses a system with a base station comprising a load processor that determines a bias parameter for a cell in response to load information. The base station broadcasts the bias parameter. A mobile device measures the signal strength of the surrounding base stations and modifies the measurements with the bias parameter. The mobile device then selects the cell having the highest modified signal strength as a serving cell.
The invention provides a method in accordance with claim 1. Further optional features are provided in accordance with the dependent claims.

### GENERAL

Also provided are a device in accordance claim 12 and a computer readable product in accordance with claim 13

The present application preferably overcomes deficiencies of the prior art providing for mobile device initiated cell reselection. The method and apparatus disclosed herein may allow many mobiles having short and sporadic data flows to reduce data congestion. Specifically, in the present application a two-fold solution is presented. First, the mobile device monitors messages sent from the base station in order to assess the level of congestion of the cell. Various means for detecting whether the cell is congested can be used. For example, the mobile device can monitor messages both addressed to it and addressed to other mobile devices and use this information to find a level of congestion.

In one embodiment, the mobile device can monitor "access reject" or "packet access reject" messages sent by a base station and use any such messages as an indication of the cell congestion. In other embodiments, clues such as packet downlink dummy control blocks, temporary flow identifiers, the number of mobiles in the packet timing channel, among others, could be used to find an indication of cell congestion.

Once a level of cell congestion is found, preferably a value is assigned to be associated with the level of cell congestion, referred to herein as the congestion penalty. The congestion penalty, in a preferred embodiment, has the units of dB to allow the signal strength of a cell to easily be modified by the congestion penalty.

The congestion penalty from above may then be applied to the cell signal strength to create an offset signal strength that can be used to determine which cell to connect to.

In a preferred embodiment, the mobile device can store the congestion penalty for all cells that it can monitor, thereby allowing the signal strengths of seen cells to be offset by their respective congestion penalties.

The present application therefore preferably provides a method of selection based on data congestion according to claim 1.

Preferably, the messages are signaling messages.

Preferably, the determining step:
adjusts the congestion level of the first cell if a number of packet downlink dummy control blocks received is below a predetermined threshold; or
adjusts the congestion level of the first cell if a number of packet downlink dummy control blocks received is above a predetermined threshold; or
adjusts the congestion level of the first cell if a number of temporary flow identifiers monitored by the mobile device is above a predetermined threshold; or
adjusts the congestion level of the first cell if a number of mobile devices in a packet timing advance control channel monitored by the mobile device is above a predetermined threshold.

Preferably, the method comprises storing congestion levels for cells the mobile device previously monitored. The congestion level of the first cell may be a penalty applied to a cell selection parameter.

Preferably, the cell selection parameter is a signal strength of the first cell.

Preferably, the penalty is a value in dB that is subtracted from the signal strength of the first cell.

Preferably, the method comprises:
monitoring at the mobile device messages sent to any mobile device within the second cell; and
determining at the mobile device a congestion level of the second cell based on the monitoring of the messages.

Preferably, the first cell and second cell are neighbouring cells.

The present application also preferably provides a mobile device adapted to choose a cell based on data congestion, the mobile device comprising means configured to perform the steps of the foregoing method.

The present application also preferably provides a method of choosing a cell based on data congestion, the method comprising the steps of: assigning a congestion penalty at a mobile device to the cell; applying the congestion penalty to a signal strength of the cell to create a selection value; and performing cell reselection using said selection value.

Preferably, the assigning step comprises the step of monitoring messages sent to any mobile device within said cell.

Preferably, the asigning step further comprises the step of assessing a congestion penalty based on messages monitored in said monitoring step.

Preferably, the assessing step adjusts a congestion penalty if one of an access reject or a packet access reject message are monitored in said monitoring step.

Preferably, the congestion penalty is assigned a value in dB. The congestion penalty may be adjusted for each access reject or packet access reject message received. The congestion penalty may comprise a maximum value. The method congestion penalty may decrease over time.

9. The assessing step may: adjust the congestion penalty if a number of packet downlink dummy control blocks received is below a predetermined threshold; or adjust the congestion penalty if a number of packet downlink dummy control blocks received is above a predetermined threshold; or adjust the congestion penalty if a number of temporary flow identifiers monitored by the mobile device is above a predetermined threshold; or adjust the congestion penalty if a number of mobile devices in a packet timing advance control channel monitored by the mobile device is above a predetermined threshold.

Preferably, the applying step comprises subtracting the congestion penalty from the received signal strength.

Preferably, the mobile device stores congestion penalties for cells it was previously connected to.

Preferably, the performing step comprises using a selection value for any cell for which the mobile device has a congestion penalty and a signal strength for any cell for which the mobile device does not have a congestion penalty.

The present application further preferably provides a mobile device adapted to choose a cell based on data congestion according to claim 12.

The present application preferably provides a computer program product comprising a computer readable medium storing program code according to claim 13.

### BRIEF DESCRIPTION OF THE DRAWINGS

The present application will be better understood with reference to the drawings in which:
**Figure 1** is a general network diagram showing an exemplary GPRS network;
**Figure 2** is a flow chart of a method to determine a congestion penalty;
**Figure 3** is a flow chart of a method to apply a congestion penalty in determining a cell to connect to;
**Figure 4** is a flow chart of an alternative embodiment of the cell selection algorithm of **Figure 3**; and
**Figure 5** is a block diagram of an exemplary mobile device that can be used in association with the present method and apparatus.

### DESCRIPTION OF PREFERRED EMBODIMENTS

Reference is now made to the drawings.

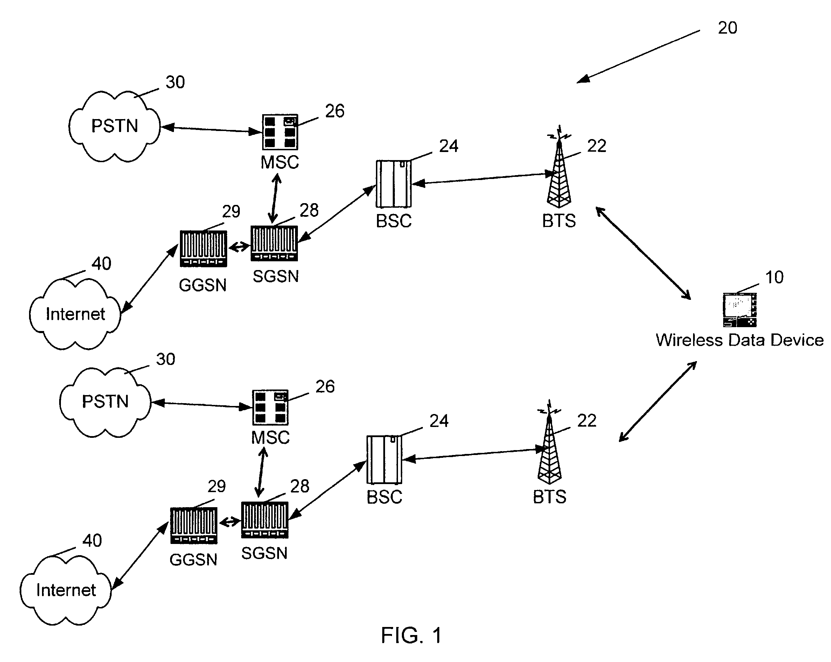

**Figure 1** is a block diagram of an exemplary wireless data network system with a wireless data device, provided in accordance with the techniques of the present application. The wireless data network system includes a wireless device **10,** an exemplary GPRS network **20,** a Public Switched Telephone Network (PSTN) **30,** and Internet **40.** The wireless data device **10** is preferably a two-way communication device having data and/or voice communication capabilities. Network **20** includes mixed circuit and packet switched components: the Base Transceiver Subsystem (BTS) **22** and the Base Station Controller (BSC) **24;** a circuit switched only component: Mobile Switching Centre (MSC) **26;** and a packet switched only component: GGSN (PDSN) 29.

Operationally, wireless device **10** communicates wirelessly with BTS **22,** BSC **24,** and serving GPRS support node (SGSN) **28** to gain access to circuit switched services provided by MSC **26 -** such as voice and Short Message Service (SMS) via PSTN **30.** Wireless device **10** also communicates wirelessly with BTS **22** and BSC **24** to gain access to packet data services provided by gateway GPRS support node (GGSN) **29-**such as e-mail, WAP, and other data services via Internet **40.**

As illustrated in **Figure 1****,** wireless data device **10** can communicate with various base stations **22.**

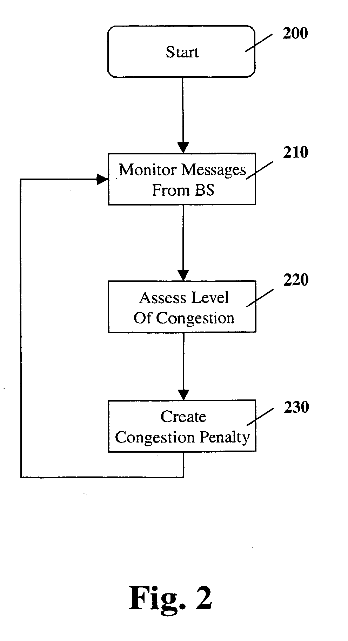

**Figure 2** shows a flow chart of a method for finding a "congestion penalty" to apply in a cell selection algorithm. The method of **Figure 2** starts at step **200** and proceeds to step **210** in which the mobile device monitors messages from a base station. As will be appreciated by those skilled in the art, the mobile device may monitor messages addressed to both it and other mobile devices. Theinformation gathered may then be used to find the level of congestion of its cell.

Typically, if the mobile device is not in a TBF, it may be monitoring the background control channel (BCCH). When a TBF is started, the base station assigns the mobile device to a packet data traffic channel (PDTCH). The mobile device can then monitor the packet data channel.

All messages transmitted by the base station include header information and may be read by all mobile devices monitoring transmissions from the base station. This enables a mobile device to choose which messages to receive. In other words, the mobile device can choose only to accept messages addressed to it.

The header information and signaling messages can, however, also be useful to other mobile devices to determine the level of congestion in the cell. All mobile devices can decode signaling messages. Various methods for determining congestion are discussed below.

In one embodiment, a mobile device can monitor access reject messages sent to any mobile device on the cell. As will be appreciated, in GPRS and GSM networks, the 3GPP standards define various access reject messages. For example, 3GPP 4.18 defines an access reject on a control channel. 3GPP 4.60 defines a packet access reject for when the mobile device is monitoring a packet data traffic channel.

As indicated above, all mobile devices are able to decode signaling messages. This contrasts with data messages, which are typically encrypted for a specific mobile device.

One such signaling message is an access reject message. An access reject message is sent to a mobile that makes a request to transmit data. A cell can indicate to the mobile that there are no available resources and try again in X seconds or milliseconds, where X is a particular value. Alternatively, the cell can indicate that the mobile should not attempt to transmit again.

An access reject message is a good indication that the cell is busy. If the cell is not allowing mobile devices to transmit then it likely has insufficient resources to handle all the TBFs at that time.

In step **220** of **Figure 2****,** the messages that are monitored in step **210** are assessed. In the above example of monitoring access reject messages sent by the base station, the level of congestion could be determined based on the number of access reject messages that are received at the mobile device.

The process then proceeds to step **230** in which a congestion penalty is created. In a preferred embodiment, the congestion penalty is a value that is assigned in dB. In other words, the congestion penalty is a value that can be directly applied to a signal strength value to thereby create an offset value.

In one embodiment, every time the mobile device, in step **220,** sees an access reject message, the process at step **230** can increment the congestion penalty that was previously created. In other words, the first time a mobile device sees an access reject message on a cell, it can assign a value of, for example, 3 dB as the congestion penalty. Thereafter, successive access reject messages received and assessed at step **220** can increment this congestion penalty in step **230.**

A second access reject message can therefore cause the mobile device to have a congestion penalty of 6 dB and the third can have the mobile device assign a congestion penalty to a cell of 9 dB.

As will be appreciated by those skilled in the art, a maximum value for the congestion penalty can also be specified. For example, 9 dB could be the maximum value that is allowed for a congestion penalty.

Alternatives to finding a congestion penalty are also available. Clues to the number of mobile devices on the cell could, for example, include counting the number of packet downlink dummy control blocks. These are defined in the 3GPP 4.60 standard. A packet downlink dummy control block is sent when a base station has nothing to transmit. In order to transmit something, these dummy blocks are sent. An indication of how busy the network is can be determined based on how many of the packet downlink dummy blocks the mobile device receives. Therefore if a mobile device receives a large number of these packet downlink dummy control blocks, it can determine that the cell is not busy. Conversely, if the mobile device does not receive any package downlink dummy control blocks, it can determine that the cell is busy.

A further clue to how busy the cell is could be the temporary flow identifier. The temporary flow identifier is a value, for example, 0 to 31, assigned by the base station to all mobiles sharing a specific channel. While the absolute value of the temporary flow identifier is not useful since the base station cycles through these values, the number of different temporary flow identifiers assigned could be used to determine the number of mobile devices sharing the channel.

As will be appreciate by those skilled in the art, the temporary flow identifier may not be determinative since the base station cycles quickly through the temporary flow identifiers. However, it still may be useful to determine how many mobile devices are sharing the channel.

A third clue could include monitoring the number of mobile devices in the packet timing advance control channel (PTCCH). The cell has spaces for 16 mobile devices to indicate the correct timing of messages sent to and from the mobile devices. A count of how many mobile devices are addressed in the channel could be useful to determine network congestion. Specifically, if a large number of channels are defined, the cell may be determined to be busy.

As with the temporary flow identifier above, the PTCCH may provide some problems in determining how congested the network is since one mobile may be assigned two different slots (for example uplink and downlink). The PTCCH may however still be useful to determine cell congestion.

Additional clues to congestion include, but are not limited to, the number of "immediate assignment messages" that a mobile device can see on the paging channel (PCH) or the paging control channel (PCCH), or the number of times the cell has to rely on extended paging.

Other options for determining cell congestion would also be apparent with regard to the present application to those skilled in the art, and the present application is not meant to be limited to any of the above methods for determining the level of congestion.

As will be further appreciated, other algorithms besides incrementing a penalty value on receipt of a message could be used. Various indicators could both increase and decrease the congestion penalty in step **230.** For example, time could be used to slowly decrease a congestion penalty. If a mobile device receives an access reject message, it may increase the congestion penalty. However, if no access reject message is received in a specific amount of time the congestion penalty may be slowly decreased in order to provide a more accurate level of congestion for the specific network. Other options include using the number of packet downlink dummy control blocks to also reduce the congestion penalty. If a large number of packet downlink dummy control blocks are received this may indicate that the network is no longer as congested as it was before and allow the mobile device to decrease the congestion penalty.

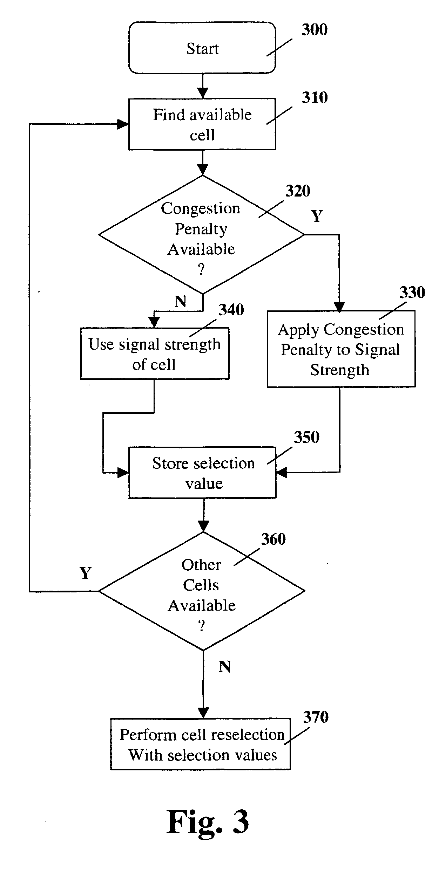

Once the level of congestion is determined in step **220** and a congestion penalty is assigned in step **230,** the mobile device must determine which cell to connect to. As will be appreciated, mobile devices continuously monitor all cells available to them and will connect to the preferred cell. In the prior art, the preferred cell was the cell with the highest signal strength minus certain offsets provided by the network. However, as indicated in the present application, a congestion penalty offset can be used to determine which cell to connect to. Reference is now made to **Figure 3****.**

In **Figure 3****,** an exemplary algorithm is presented for finding available cells and determining the best cell to connect to. The algorithm of **Figure 3** is exemplary for the principles involved, and is not meant to limit a mobile device to the specific algorithm.

In **Figure 3****,** the process starts at step **300** and proceeds to step **310.** In step **310,** the mobile device finds a cell that is available to it. In this case, any cell that the mobile device can detect is a cell available to it.

From step **310,** the mobile proceeds to step **320** in which it checks whether a congestion penalty is available for the available cell. In a preferred embodiment, the mobile device keeps track of any congestion penalties that it has previously determined for a specific cell. As will be appreciated, the mobile device can only create cell congestion penalties for cells that it has connected to in the past. The mobile device may, even after cell reselection, keep this cell congestion penalty for the cell as long as that cell is available to the mobile device. Therefore, this cell congestion penalty can be used in future determinations to indicate which cell to connect to.

The process of step **320** will not have a cell congestion penalty available for any cell that the mobile device has not connected to previously. If, in step **320,** a cell congestion penalty is determined to be available, the process proceeds to step **330** in which the cell congestion penalty is applied to the signal strength of the detected cell. As indicated above, the cell congestion penalty is preferably stored in dB and can therefore be directly subtracted from (or added to, if the penalty is stored as a negative) the detected signal strength.

As will be appreciated, the cell reselection algorithm defined in 3GPP 5.08 standards indicate that for every cell monitored, a mobile device knows its signal strength, offsets and parameters. These offsets and parameters are defined in the standards. The signal strength is taken and offsets are subtracted to create a value of C1, C2, C31 or C32. The above describes a method for adding an additional congestion penalty to subtract to from C1, C2, C31 or C32.

Conversely, if no cell congestion penalty is available for the particular cell in step 320, the process proceeds to step **340** in which the received signal strength of the cell is noted.

From step **330** or **340,** the process proceeds to step **350** in which the selection value for the particular cell is stored. The selection value is preferably stored in relation to the Absolute Radio Frequency Channel Number (ARFCN) and Base Station Identity Code (BSIC) which uniquely identify each base station in an area. Thereafter, the specific base station is associated with the congestion penalty in order to determine a cell reselection

The process next proceeds to step **360** in which it checks whether other cells are available. If other cells are available, the process proceeds back to steps **310** to **350** for the other cells. Conversely, if step **360** determines that no other cells are available, the process proceeds to step 370 in which a cell is selected based on the selection value stored in step **350.**

As will be appreciated, the congestion penalty may also be time limited. Thus, the mobile device does not have new data concerning the cell congestion of a particular cell for a specific period of time, it can erase the previous cell congestion penalty.

Applying the above, a worse case scenario is that all cells have a maximum congestion penalty assigned to them. In this case, the congestion penalty becomes meaningless since the same cell congestion penalty is subtracted from all signal strengths, and in effect the signal strength is used for cell selection. Therefore, the above alternatives of using time or of erasing the congestion penalty when the mobile device can no longer see the cell are used.

The above method is described with relation to **Figure 3** thereby allows the cell selection to be determined both by signal strength and by a congestion penalty. A cell can be compared to its neighbors to determine the alternate cell to connect to.

While the above uses GPRS standards to illustrate cell reselection and messages sent, one skilled in the art would realize that the above could be equally applied to other networks.

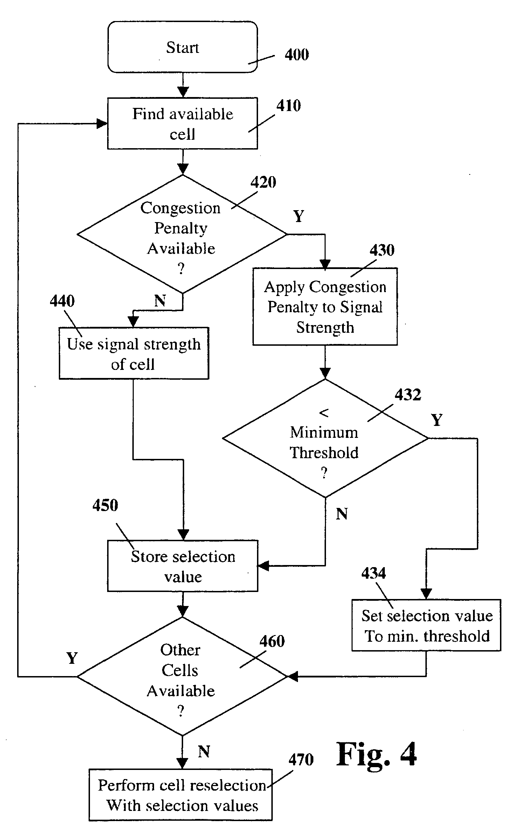

Reference is now made to **Figure 4. Figure 4** illustrates a flow chart for cell selection within an alternative embodiment to that of **Figure 3****.** As will be appreciated, each base station defines a minimum signal strength threshold that can be used to determine whether a mobile device should attempt to connect to that base station. Specifically, if the signal strength is below the threshold or defined by the base station, the mobile device should not attempt to connect to the base station.

In the present case, it is undesirable to reduce the signal strength below the minimum signal strength threshold. Doing so would cause the mobile device to consider the cell as one that is not able to connect to, when in fact the cell is available.

In the embodiment of **Figure 4****,** steps **400, 410, 420, 440, 460** and **470** are the same as steps **310, 320, 340, 350, 360** and 370 of **Figure 3****.**

After step **430** in the embodiment of **Figure 4****,** however, the mobile device next proceeds to step **432** in which it checks to see whether or not the signal strength minus the congestion penalty is less than the minimal threshold for connecting to the base station. If yes, the mobile device proceeds to step **434** in which it sets the selection value to the minimum connection threshold. Optionally, in step **434** the congestion value could be ignored and the selection value could be merely the originally detected signal strength.

From step **432,** if the signal strength minus the congestion penalty is greater than the minimum threshold, the process proceeds to step **450** in which the selection value is stored.

From step **450** or step **434,** the mobile device proceeds to step **460** and the method proceeds as in the process of **Figure 3****.**

The above ensures that the signal strength does not fall below a minimal convention threshold.

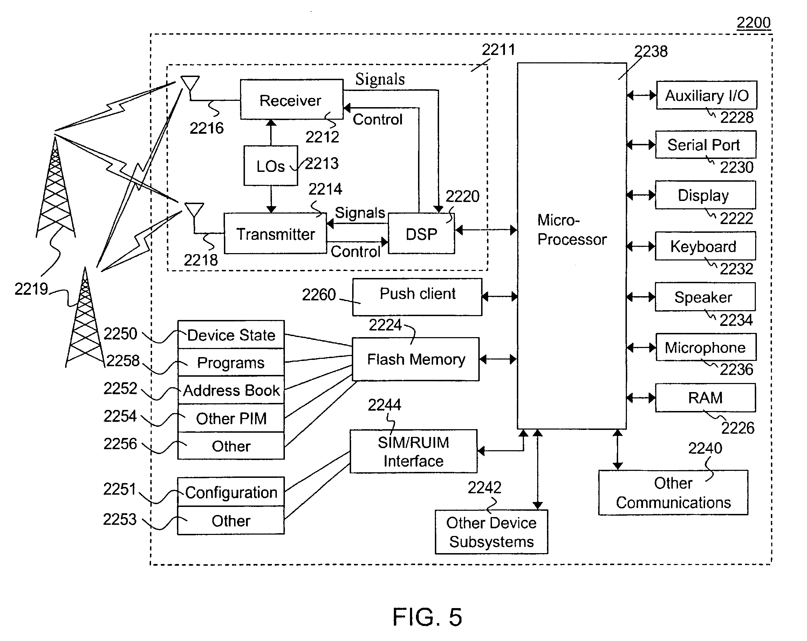

While various mobile devices could be used to implement the above-captioned method and apparatus, an exemplary mobile device is illustrated in **Figure 5****.** The mobile device of **Figure 5** is not meant to be limiting, but merely provides an example of a mobile device that could be used in association with the present method and apparatus.

**Figure 5** is a block diagram illustrating a mobile device apt to be used with preferred embodiments of the apparatus and method of the present application. Mobile device **2200** is preferably a two-way wireless communication device having at least voice and data communication capabilities. Mobile device **2200** preferably has the capability to communicate with other computer systems on the Internet. Depending on the exact functionality provided, the mobile device may be referred to as a data messaging device, a two-way pager, a wireless e-mail device, a cellular telephone with data messaging capabilities, a wireless Internet appliance, or a data communication device, as examples.

Where mobile device **2200** is enabled for two-way communication, it will incorporate a communication subsystem **2211,** including both a receiver **2212** and a transmitter **2214,** as well as associated components such as one or more, preferably embedded or internal, antenna elements **2216** and **2218,** local oscillators (LOs) **2213,** and a processing module such as a digital signal processor (DSP) **2220.** As will be apparent to those skilled in the field of communications, the particular design of the communication subsystem **2211** will be dependent upon the communication network in which the device is intended to operate.

Network access requirements will also vary depending upon the type of network 2219. In some CDMA networks network access is associated with a subscriber or user of mobile device **2200.** A CDMA mobile device may require a removable user identity module (RUIM) or a subscriber identity module (SIM) card in order to operate on a CDMA network. The SIM/RUIM interface **2244** is normally similar to a card-slot into which a SIM/RUIM card can be inserted and ejected like a diskette or PCMCIA card. The SIM/RUIM card can have approximately 64K of memory and hold many key configuration **2251,** and other information **2253** such as identification, and subscriber related information.

When required network registration or activation procedures have been completed, mobile device **2200** may send and receive communication signals over the network **2219.** As illustrated in **Figure 5**, network **2219** can consist of multiple base stations communicating with the mobile device. For example, in a hybrid CDMA 1x EVDO system, a CDMA base station and an EVDO base station communicate with the mobile device and the mobile device is connected to both simultaneously. The EVDO and CDMA 1x base stations use different paging slots to communicate with the mobile device.

Signals received by antenna **2216** through communication network **2219** are input to receiver **2212,** which may perform such common receiver functions as signal amplification, frequency down conversion, filtering, channel selection and the like, and in the example system shown in **Figure 5****,** analog to digital (A/D) conversion. A/D conversion of a received signal allows more complex communication functions such as demodulation and decoding to be performed in the DSP **2220.** In a similar manner, signals to be transmitted are processed, including modulation and encoding for example, by the DSP **2220** and input to transmitter **2214** for digital to analog conversion, frequency up conversion, filtering, amplification and transmission over the communication network **2219** via antenna **2218.** The DSP **2220** not only processes communication signals, but also provides for receiver and transmitter control. For example, the gains applied to communication signals in receiver **2212** and transmitter **2214** may be adaptively controlled through automatic gain control algorithms implemented in the DSP **2220.**

Mobile device **2200** preferably includes a microprocessor **2238** which controls the overall operation of the device. Communication functions, including at least data and voice communications, are performed through communication subsystem **2211.** Microprocessor **2238** also interacts with further device subsystems such as the display **2222,** flash memory **2224,** random access memory (RAM) **2226,** auxiliary input/output (I/O) subsystems **2228,** serial port **2230,** two or more keyboards or keypads **2232,** speaker **2234,** microphone **2236,** other communication subsystem **2240** such as a short-range communications subsystem and any other device subsystems generally designated as **2242.** Serial port **2230** could include a USB port or other port known to those in the art.

Some of the subsystems shown in **Figure 5** perform communication-related functions, whereas other subsystems may provide "resident" or on-device functions. Notably, some subsystems, such as keyboard **2232** and display **2222,** for example, may be used for both communication-related functions, such as entering a text message for transmission over a communication network, and device-resident functions such as a calculator or task list.

Operating system software used by the microprocessor **2238** is preferably stored in a persistent store such as flash memory **2224,** which may instead be a read-only memory (ROM) or similar storage element (not shown). Those skilled in the art will appreciate that the operating system, specific device applications, or parts thereof, may be temporarily loaded into a volatile memory such as RAM **2226.** Received communication signals may also be stored in RAM **2226.**

As shown, flash memory **2224** can be segregated into different areas for both computer programs **2258** and program data storage **2250, 2252, 2254** and **2256.** These different storage types indicate that each program can allocate a portion of flash memory **2224** for their own data storage requirements. Microprocessor **2238,** in addition to its operating system functions, preferably enables execution of software applications on the mobile device. A predetermined set of applications that control basic operations, including at least data and voice communication applications for example, will normally be installed on mobile device **2200** during manufacturing. Other applications could be installed subsequently or dynamically.

A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **2219.** In a preferred embodiment, the PIM data items are seamlessly integrated, synchronized and updated, via the wireless network **2219,** with the mobile device user's corresponding data items stored or associated with a host computer system. Further applications may also be loaded onto the mobile device **2200** through the network **2219,** an auxiliary I/O subsystem **2228,** serial port **2230,** short-range communications subsystem **2240** or any other suitable subsystem **2242,** and installed by a user in the RAM **2226** or preferably a non-volatile store (not shown) for execution by the microprocessor **2238.** Such flexibility in application installation increases the functionality of the device and may provide enhanced on-device functions, communication-related functions, or both. For example, secure communication applications may enable electronic commerce functions and other such financial transactions to be performed using the mobile device **2200.**

In a data communication mode, a received signal such as a text message or web page download will be processed by the communication subsystem **2211** and input to the microprocessor **2238,** which preferably further processes the received signal for output to the display **2222,** or alternatively to an auxiliary I/O device **2228.**

A user of mobile device **2200** may also compose data items such as email messages for example, using the keyboard **2232,** which is preferably a complete alphanumeric keyboard or telephone-type keypad, in conjunction with the display **2222** and possibly an auxiliary I/O device **2228.** Such composed items may then be transmitted over a communication network through the communication subsystem **2211.**

For voice communications, overall operation of mobile device **2200** is similar, except that received signals would preferably be output to a speaker **2234** and signals for transmission would be generated by a microphone **2236.** Alternative voice or audio I/O subsystems, such as a voice message recording subsystem, may also be implemented on mobile device **2200.** Although voice or audio signal output is preferably accomplished primarily through the speaker **2234,** display **2222** may also be used to provide an indication of the identity of a calling party, the duration of a voice call, or other voice call related information for example.

Serial port **2230** in **Figure 5**, would normally be implemented in a personal digital assistant (PDA)-type mobile device for which synchronization with a user's desktop computer (not shown) may be desirable, but is an optional device component. Such a port **2230** would enable a user to set preferences through an external device or software application and would extend the capabilities of mobile device **2200** by providing for information or software downloads to mobile device **2200** other than through a wireless communication network. The alternate download path may for example be used to load an encryption key onto the device through a direct and thus reliable and trusted connection to thereby enable secure device communication. As will be appreciated by those skilled in the art, serial port **2230** can further be used to connect the mobile device to a computer to act as a modem.

Other communications subsystems **2240,** such as a short-range communications subsystem, is a further optional component which may provide for communication between mobile device **2200** and different systems or devices, which need not necessarily be similar devices. For example, the subsystem **2240** may include an infrared device and associated circuits and components or a Bluetooth ™ communication module to provide for communication with similarly enabled systems and devices.

In summary, provided is a method and apparatus for reducing data congestion in a cell having signal strength, the method having the steps of: assigning a congestion penalty at a mobile device to a cell; applying the congestion penalty to the signal strength to create a selection value; and performing cell reselection using the selection value.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein.

## Claims

1. A method of cell selection based on data congestion, the method comprising the steps of:
monitoring at a mobile device signaling messages sent to any mobile device within a first cell;
determining at the mobile device a congestion level of the first cell based on at least one of the type and number of messages found in the monitoring step; and
selecting a second cell based on the congestion level of the first cell.

2. The method of claim 1, wherein the determining step:
adjusts the congestion level of the first cell if a number of packet downlink dummy control blocks received is below a predetermined threshold; or
adjusts the congestion level of the first cell if a number of packet downlink dummy control blocks received is above a predetermined threshold; or
adjusts the congestion level of the first cell if a number of temporary flow identifiers monitored by the mobile device is above a predetermined threshold; or
adjusts the congestion level of the first cell if a number of mobile devices in a packet timing advance control channel monitored by the mobile device is above a predetermined threshold.

3. The method of claim 1, further comprising storing congestion levels for cells the mobile device previously monitored.

4. The method of claim 1, wherein the congestion level of the first cell is a penalty applied to a cell selection parameter.

5. The method of claim 4, wherein the cell selection parameter is a signal strength of the first cell.

6. The method of claim 5, wherein the penalty is a value in dB that is subtracted from the signal strength of the first cell.

7. The method of any one of claims 1 to 6; further comprising:
monitoring at the mobile device messages sent to any mobile device within the second cell; and
determining at the mobile device a congestion level of the second cell based on the monitoring of the messages.

8. The method of any one of claims 1-6, wherein the first cell and second cell are neighbors.

9. The method of any one of claims 1 to 8, wherein the signaling messages are one of packet downlink dummy control blocks, temporary flow identifiers, access reject, packet access reject messages, and immediate assignment messages.

10. The method of any one of claims 1 to 8, wherein the signaling messages are addressed to a specific mobile device.

11. The method of any one of claims 1 to 8, wherein the determining step comprises:
indirectly deducing the congestion level from the messages found in the monitoring step.

12. A mobile device (10) adapted to choose a cell based on data congestion, the mobile device configured to perform any method of claims 1 to 11.

13. A compute readable program product comprising a computer readable medium storing a program code which when executed by a processor of a computing device causes said computing device to perform any method of claims 1 to 11.

## Patentansprüche

1. Verfahren einer Zellauswahl basierend auf einem Datenstau, wobei das Verfahren die Schritte aufweist:
Überwachen, an einer mobilen Vorrichtung, von
Signalisierungsnachrichten, die an jede mobile Vorrichtung in einer ersten Zelle gesendet werden;
Bestimmen, an der mobilen Vorrichtung, eines Staupegels der ersten Zelle basierend auf zumindest einem aus dem Typ und der Anzahl von Nachrichten, die in dem Überwachungsschritt gefunden werden; und
Auswählen einer zweiten Zelle basierend auf dem Staupegel der ersten Zelle.

2. Verfahren gemäß Anspruch 1, wobei der Bestimmungsschritt:
den Staupegel der ersten Zelle anpasst, wenn eine Anzahl von empfangenen Paket-Downlink-Dummysteuerungsblöcken unter einer vorgegebenen Schwelle ist; oder
den Staupegel der ersten Zelle anpasst, wenn eine Anzahl von empfangenen Paket-Downlink-Dummysteuerungsblöcken über einer vorgegebenen Schwelle ist; oder
den Staupegel der ersten Zelle anpasst, wenn eine Anzahl von temporären Fluss-Identifizierern, überwacht durch die mobile Vorrichtung, über einer vorgegebenen Schwelle ist; oder
den Staupegel der ersten Zelle anpasst, wenn eine Anzahl von mobilen Vorrichtungen in einem Paket-Timing-Advance-Steuerungskanal (packet timing advance control channel), überwacht durch die mobile Vorrichtung, über einer vorgegebenen Schwelle ist.

3. Verfahren gemäß Anspruch 1, das weiter aufweist ein Speichern von Staupegeln für Zellen, die die mobile Vorrichtung vorher überwacht hat.

4. Verfahren gemäß Anspruch 1, wobei der Staupegel der ersten Zelle ein Handicap ist, das auf einen Zelle-Auswahl-Parameter angewendet wird.

5. Verfahren gemäß Anspruch 4, wobei der Zelle-Auswahl-Parameter eine Signalstärke der ersten Zelle ist.

6. Verfahren gemäß Anspruch 5, wobei das Handicap ein Wert in dB ist, der von der Signalstärke der ersten Zelle subtrahiert wird.

7. Verfahren gemäß einem der Ansprüche 1 bis 6; das weiter aufweist:
Überwachen, an den mobilen Vorrichtung, von Nachrichten, die an jede mobile Vorrichtung in der zweiten Zelle gesendet werden; und
Bestimmen, an der mobilen Vorrichtung, eines Staupegels der zweiten Zelle basierend auf dem Überwachen der Nachrichten.

8. Verfahren gemäß einem der Ansprüche 1-6, wobei die erste Zelle und die zweite Zelle Nachbarn sind.

9. Verfahren gemäß einem der Ansprüche 1 bis 8, wobei die Signalisierungsnachrichten eines sind aus Paket-Downlink-Dummysteuerungsblöcken, temporären Fluss-Identifizierern, Zugangszurückweisungen, Paket-Zugangszurückweisungsnachrichten und unmittelbare Zuweisungsnachrichten.

10. Verfahren gemäß einem der Ansprüche 1 bis 8, wobei die Signalisierungsnachrichten an eine spezifische mobile Vorrichtung adressiert sind.

11. Verfahren gemäß einem der Ansprüche 1 bis 8, wobei der Bestimmungsschritt aufweist:
indirektes Ableiten des Staupegels aus den Nachrichten, die in dem Überwachungsschritt gefunden werden.

12. Mobile Vorrichtung (10), die ausgebildet ist zum Wählen einer Zelle basierend auf einem Datenstau, wobei die mobile Vorrichtung konfiguriert ist, ein Verfahren gemäß den Ansprüchen 1 bis 11 durchzuführen.

13. Computerlesbares Programmprodukt, das ein computerlesbares Medium aufweist, das einen Programmcode speichert, der bei Ausführung durch einen Prozessor einer Computervorrichtung die Computervorrichtung veranlasst, ein Verfahren gemäß den Ansprüchen 1 bis 11 durchzuführen.

## Revendications

1. Procédé de sélection de cellules en fonction de la congestion de données, le procédé comprenant les étapes qui consistent :
à surveiller au niveau d'un dispositif mobile des messages de signalisation envoyés à n'importe quel dispositif mobile dans une première cellule ;
à déterminer au niveau du dispositif mobile un niveau de congestion de la première cellule en fonction d'au moins l'un du type et du nombre de messages trouvés dans l'étape de surveillance ; et
à sélectionner une deuxième cellule sur la base du niveau de congestion de la première cellule.

2. Procédé de la revendication 1, dans lequel l'étape de détermination consisté :
à régler le niveau de congestion de la première cellule si un nombre de blocs factices de contrôle de la liaison descendante en mode paquets reçus est inférieur à un seuil prédéterminé ; ou
à régler le niveau de congestion de la première cellule si un nombre de blocs factices de contrôle de la liaison descendante en mode paquets reçus est supérieur à un seuil prédéterminé ; ou
à régler le niveau de congestion de la première cellule si un nombre d'identifiants de flux temporaire surveillés par le dispositif mobile est supérieur à un seuil prédéterminé ; ou
à régler le niveau de congestion de la première cellule si un nombre de dispositifs mobiles dans un canal de contrôle de l'avance temporelle en mode paquets surveillé par le dispositif mobile est supérieur à un seuil prédéterminé.

3. Procédé de la revendication 1, comprenant en outre le stockage des niveaux de congestion pour les cellules que le dispositif mobile a précédemment surveillées.

4. Procédé de la revendication 1, dans lequel le niveau de congestion de la première cellule est une pénalité appliquée à un paramètre de sélection de cellules.

5. Procédé de la revendication 4, dans lequel le paramètre de sélection de cellules est une intensité du signal de la première cellule.

6. Procédé de la revendication 5, dans lequel la pénalité est une valeur en dB qui est soustraite de l'intensité du signal de la première cellule.

7. Procédé de l'une quelconque des revendications 1 à 6 ; comprenant en outre le fait :
de surveiller au niveau du dispositif mobile des messages envoyés à n'importe quel dispositif mobile dans la deuxième cellule ; et
de déterminer au niveau du dispositif mobile un niveau de congestion de la deuxième cellule en fonction de la surveillance des messages.

8. Procédé de l'une quelconque des revendications 1-6, dans lequel la première cellule et la deuxième cellule sont voisines.

9. Procédé de l'une quelconque des revendications 1 à 8, dans lequel les messages de signalisation sont l'un parmi des blocs factices de contrôle de la liaison descendante en mode paquets, des identifiants de flux temporaire, d'un rejet d'accès, de messages de rejet d'accès aux paquets et de messages d'attribution immédiate.

10. Procédé de l'une quelconque des revendications 1 à 8, dans lequel les messages de signalisation sont attribués à un dispositif mobile spécifique.

11. Procédé de l'une quelconque des revendications 1 à 8, dans lequel l'étape de détermination comprend le fait :
de déduire indirectement le niveau de congestion d'après les messages trouvés dans l'étape de surveillance.

12. Dispositif mobile (10) adapté pour choisir une cellule sur la base de la congestion des données, le dispositif mobile étant configuré pour exécuter un procédé quelconque des revendications 1 à 11.

13. Produit-programme lisible par ordinateur comprenant un support lisible par ordinateur stockant un code de programme qui, lorsqu'il est exécuté par un processeur d'un dispositif informatique amène ledit dispositif informatique à exécuter un procédé quelconque des revendications 1 à 11.
